Europäisches Patentamt

European Patent Office

Office européen des brevets

(19)

(11) **EP 0 782 695 B1**

## (12) FASCICULE DE BREVET EUROPEEN

(45) Date de publication et mention
de la délivrance du brevet:
**14.10.1998 Bulletin 1998/42**

(21) Numéro de dépôt: **96927095.8**

(22) Date de dépôt: **26.07.1996**

(51) Int Cl.⁶: **G01C 11/02**, H04N 5/335

(86) Numéro de dépôt international:
**PCT/FR96/01188**

(87) Numéro de publication internationale:
**WO 97/05451 (13.02.1997 Gazette 1997/08)**

(54) **PROCEDE D'ACQUISITION D'UNE IMAGE PAR BALAYAGE POUSSE-BALAI**

BILDAUFNAHMEVERFAHREN MIT "PUSH-BROOM" ABTASTUNG

IMAGE ACQUISITION METHOD USING PUSH-BROOM SCANNING

(84) Etats contractants désignés:
**AT BE CH DE DK ES FI FR GB GR IE IT LI LU MC NL PT SE**

(30) Priorité: **28.07.1995 FR 9509241**
**28.07.1995 FR 9509242**
**28.07.1995 FR 9509263**

(43) Date de publication de la demande:
**09.07.1997 Bulletin 1997/28**

(73) Titulaire: **CENTRE NATIONAL D'ETUDES SPATIALES**
**F-75039 Paris Cedex 01 (FR)**

(72) Inventeurs:
• **ROUGE, Bernard**
**F-31400 Toulouse (FR)**
• **LATRY, Christophe**
**F-31400 Toulouse (FR)**
• **FAVARD, Jean-Claude**
**I-21029 Varese (IT)**
• **PAUC, Gilbert**
**F-31320 Lacroix-Falgarde (FR)**

(74) Mandataire: **Schrimpf, Robert**
**Cabinet Regimbeau**
**26, Avenue Kléber**
**75116 Paris (FR)**

(56) Documents cités:
EP-A- 0 368 354      WO-A-91/03125
DE-A- 4 307 833      FR-A- 2 678 460
US-A- 5 067 016

EP 0 782 695 B1

## Description

La présente invention est relative à un procédé d'acquisition d'une image d'observation satellitaire de la terre par balayage "Pousse-balai" (Push-broom selon la terminologie anglo-saxonne) à partir d'une barrette ou d'une matrice de détecteurs de type à transfert de charge (CCD) défilant en regard de la zone observée.

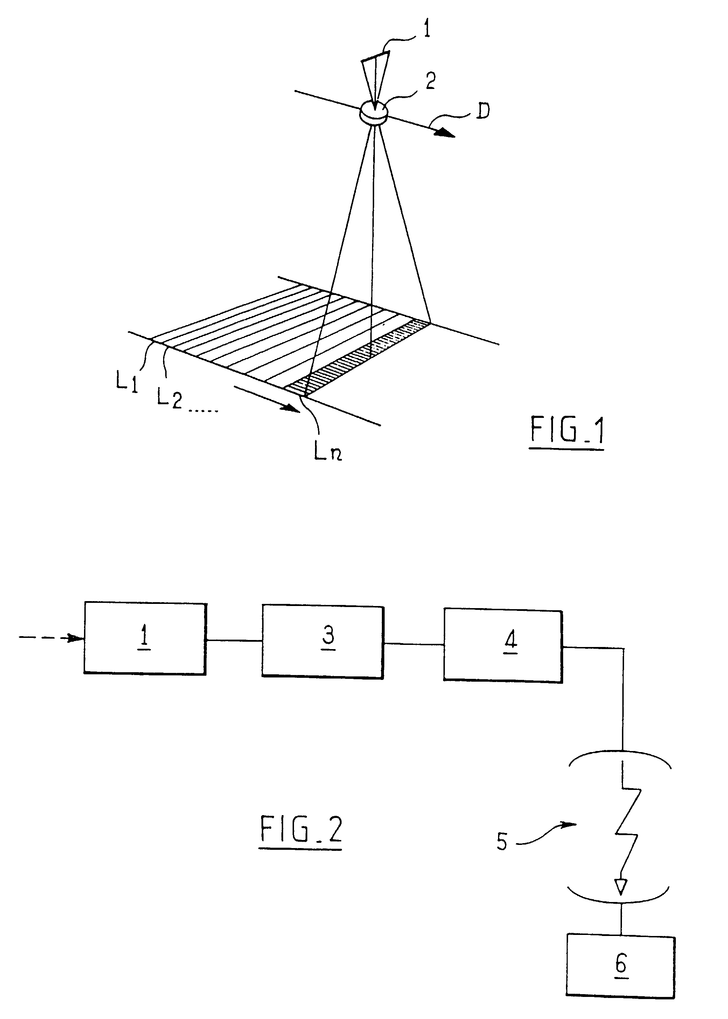

Le principe d'un balayage de type "pousse-balai" a été illustré sur la figure 1 dans le cas d'une barrette 1 de détecteurs.

La barrette 1 réalise l'observation successive, au cours du défilement du satellite qui la porte, de lignes L1, L2,..., Ln perpendiculaires au déplacement (flèche D). Une optique 2 d'instrumentation forme à chaque instant l'image d'une ligne de paysage sur la ligne des détecteurs, la barrette 1 étant placée dans le plan focal de l'optique 2, perpendiculairement au vecteur vitesse du satellite. Le paysage défile devant chaque détecteur qui intègre le flux lumineux pendant le temps de pose et le transforme en une charge électrique proportionnelle.

On a illustré sur la figure 2 une chaîne de traitement classique des images ainsi relevées.

Cette chaîne de traitement comporte de façon schématique une unité 3 de traitement et d'amplification en sortie des détecteurs de la barrette 1, un codeur 4 analogique-numérique recevant le signal en sortie de l'unité 3, des moyens 5 pour la transmission au sol à partir du satellite des images numériques ainsi relevées, une unité 6 pour la reconstitution au sol des images.

L'unité 3 comporte en particulier un registre à décalage dans lequel les informations intégrées et stockées dans chaque détecteur de la barrette 1 sous forme de charge sont transférées à l'issue d'un temps de pose. Ce registre assure ensuite un transfert électronique des charges, qui sont converties en une succession de tensions proportionnelles aux flux lumineux reçus et intégrés.

L'unité 6 au sol reconstruit les images en mettant notamment en oeuvre des traitements de déconvolution destinés à compenser les défauts instrumentaux, ainsi que le cas échéant des traitements d'interpolation pour reconstituer certains pixels de l'image.

Usuellement, le temps d'acquisition entre deux lignes successives, ou temps d'échantillonnage, est tel que le point au sol situé à la verticale du satellite s'est déplacé d'une distance égale aux dimensions d'un détecteur élémentaire projeté au sol.

En se ramenant dans le plan focal de l'instrument, on dispose alors d'un échantillonnage de même fréquence en ligne et en colonne, égale à l'inverse de la taille d'un détecteur élémentaire dans le plan focal.

Toutefois, cette approche ne tient pas compte de la Fonction de Transfert de Modulation (FTM) instrumentale.

On rappelle que la Fonction de Transfert de Modulation d'un système optique est une fonction de l'espace fréquentiel qui traduit l'aptitude du système à transmettre les diverses fréquences. Elle est caractéristique de la restitution des contrastes du paysage par le système.

Dans le cas d'une acquisition de type pousse-balai, la Fonction de Transfert de Modulation dépend principalement de l'optique du système, de l'effet de filé (affaissement de contraste dû au déplacement), ainsi que des détecteurs.

Les systèmes d'observation sont caractérisés par la fréquence de coupure fc, au delà de laquelle la FTM est négligeable. On peut associer une fréquence de coupure à chacun des effets contribuant à la Fonction de Transfert de Modulation globale (optique, filé et intégration sur la zone photosensible), la fréquence de coupure globale étant la plus petite des trois valeurs précédentes.

La Fonction de Transfert de modulation associée à l'intégration sur la zone photosensible s'annule pour une fréquence égale à l'inverse de la taille d'un détecteur élémentaire qui constitue en première approximation la fréquence de coupure correspondante.

En général, c'est l'effet d'intégration sur la zone photosensible qui impose la fréquence de coupure globale.

Dans le cas d'une acquisition classique où la fréquence d'échantillonnage fe est égale à la fréquence de coupure fc, la condition de Shannon (fe $\geq$ 2.fc) n'est donc pas respectée et il en résulte un fort repliement de spectre introduisant des artéfacts et rendant difficile toute tentative de déconvolution et d'interpolation.

Un but de l'invention est de proposer un procédé de traitement qui permet :

- de limiter le repliement du spectre, afin d'autoriser au sol une restauration et/ou interpolation convenable de l'image ;
- de minimiser la redondance de l'information transmise au sol de façon à pouvoir utiliser au mieux les capacités de transmission de données des instruments.

Il a déjà été proposé dans la demande de brevet FR 2 678 460 un procédé de traitement permettant d'enregistrer et de retransmettre des images avec un pas d'échantillonnage en ligne et en colonne deux fois plus petit que pour un instrument de balayage classique, et ce avec un télescope et des détecteurs élémentaires identiques.

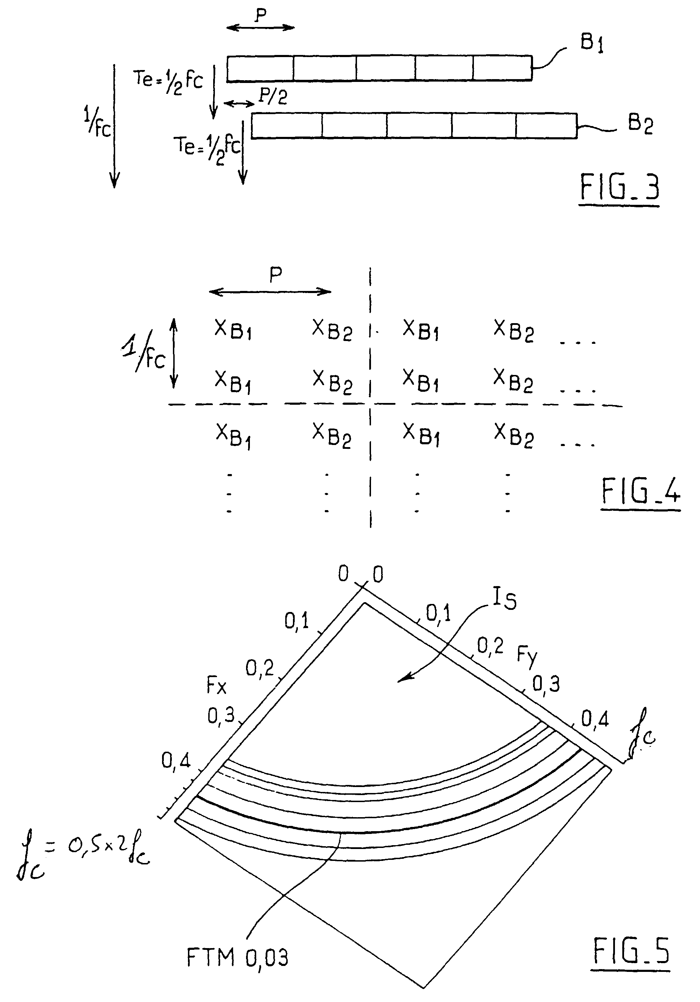

Selon ce procédé, qui a été illustré sur la figure 3, on réalise un suréchantillonnage en :

- divisant le temps d'intégration et le temps d'échantillonnage par deux, la fréquence d'échantillonnage en colonne devenant alors égale au double de la fréquence de coupure ;
- superposant, pour les lignes, les relevés des deux barrettes B1 et B2 décalées l'une par rapport à l'autre d'une distance égale à la moitié de la taille d'un détecteur élémentaire.

La superposition des deux barrettes peut être obtenue par l'intermédiaire d'un diviseur optique de ligne ou en utilisant le défilement du satellite par décalage dans le champ de la deuxième barrette d'un nombre entier de pas d'échantillonnage dans le sens d'avancement et d'un demi pas dans le sens de la barrette. Le décalage des deux grilles d'échantillonnage peut être différent du demi pixel, moyennant sa prise en compte dans le post traitement, la valeur optimale du décalage est toutefois la moitié de la taille d'un détecteur élémentaire en ligne et en colonne.

On a illustré sur la figure 4 une matrice de pixels obtenus avec un tel traitement. Les pixels XB1 sont ceux acquis avec la barrette B1, les pixels XB2 ceux acquis avec la barrette B2.

Chacune des deux barrettes B1 et B2 génère donc une grille d'échantillonnage rectangulaire dont le pas le long des lignes vaut la taille d'un détecteur élémentaire et le pas le long des colonnes la moitié de cette valeur, les deux grilles étant décalées d'une distance égale à la moitié d'un détecteur élémentaire. Par entrelacement tel qu'indiqué sur la figure 4, on reconstitue bien une grille d'échantillonnage carrée dont le pas en ligne coïncide avec le pas en colonne et vaut la moitié de la taille d'un détecteur élémentaire.

On dispose ainsi d'un procédé respectant la condition d'échantillonnage de Shannon au prix d'un quadruplement du débit d'information.

On a illustré sur la figure 5 la représentation dans le plan de Fourier d'une Fonction de Transfert de Modulation (FTM) réaliste pour un instrument d'observation de type "PUSH-BROOM", utilisé selon le procédé d'acquisition décrit dans FR 2 678 460. Cette FTM s'exprime comme le produit d'une fonction de transfert ftml des fréquences lignes normalisées fx et d'une fonction de transfert ftmc des fréquences colonnes fy, ces deux fonctions étant données par les formules suivantes dans le cas de l'instrument SPOT 5 :

$$ftml = \frac{e^{(-3.431\ fx)}\ sin\ (2\pi fx)}{2\pi fx}$$

$$ftmc = \frac{e^{(-3.03 fy)}\ sin\ (2\pi fy)\ sin(\pi fy)}{2\pi^2 fy^2}$$

Sur cette représentation, la FTM est normalisée à 1 à l'origine et les fréquences fx et fy sont normalisées par rapport au double de la fréquence d'échantillonnage classique et les différentes courbes représentent des courbes de niveaux par pas de 0,01 jusqu'à la valeur 0,1.

On voit sur cette représentation que les Fonctions de Transfert de Modulation sont faibles sur une grande partie du spectre d'origine fréquentiel.

Les fonctions ftml et ftmc s'annulent pour $fx = fy = 0.5$, et la condition de Shannon est donc satisfaite.

En fait, toute l'information significative est essentiellement contenue dans le triangle supérieur $I_s$, dont les extrémités correspondent à l'origine du plan de Fourier et aux points (0 ; 0,5) et (0,5 ; 0).

Cette zone est en effet tangentée par la courbe FTM de niveau 0,03, valeur en dessous de laquelle on considère que le signal est noyé dans le bruit. Au delà de cette courbe, c'est-à-dire en dehors de la zone $I_s$ précitée, le signal est inexploitable.

Par conséquent, l'échantillonnage proposé dans la technique décrite dans la demande FR 2 678 460 n'est pas optimal. Il transmet inutilement une grande partie du plan fréquentiel.

Un but de l'invention est donc de proposer un procédé d'acquisition qui pallie cet inconvénient : il permet de conserver un repliement spectral négligeable tout en optimisant le débit d'acquisition.

On se place dans tout le présent texte dans le cas où la Fonction de Transfert de Modulation est à symétrie rectangulaire.

L'invention propose un procédé d'acquisition et de traitement d'une image d'observation satellitaire de la terre au moyen d'au moins une barrette ou une matrice de détecteurs de type à transfert de charge défilant en regard d'une zone observée, dans lequel on réalise une acquisition d'une pluralité de pixels, que l'on échantillonne en quinconce, caractérisé en ce que les pas en ligne et en colonne de cet échantillonnage quinconce sont tels que le spectre de l'image est principalement situé dans une zone du plan de Fourier où la Fonction de Transfert de Modulation est significative et où le repliement du spectre est limité.

Par rapport au procédé de FR 2 678 460 décrit précédemment, on divise donc par deux le débit de télémesure correspondant à une même zone imagée au sol.

Plus particulièrement, dans un mode de mise en oeuvre avantageux, il est proposé un procédé d'acquisition et de traitement d'une image d'observation satellitaire de la terre au moyen d'au moins deux barrettes ou matrices de détecteurs de même pas, s'étendant de façon juxtaposée perpendiculairement à leurs directions de déplacement et d'un nombre entier plus une fraction de pas élémentaire parallèlement à leur direction de déplacement, lesdites barrettes ou matrices étant décalées l'une par rapport à l'autre d'une fraction de pas élémentaire, perpendiculairement à leur direction de déplacement, caractérisé en ce que les temps d'échantillonnage de ces deux barrettes sont égaux à l'inverse de la fréquence de coupure des détecteurs élémentaires.

Dans un autre mode de mise en oeuvre avantageux, il est proposé un procédé d'acquisition et de traitement d'une image d'observation satellitaire de la terre au moyen d'au moins une barrette ou matrices de détecteurs, dont le pas p correspond à l'inverse de la fréquence de coupure desdits détecteurs, caractérisé en ce que ladite barrette est orientée dans son plan de déplacement d'un angle $\alpha = 1/n$ par rapport à sa direction de déplacement, n étant un nombre entier, et en ce que le temps d'échantillonnage des détecteurs élémentaires correspond à un déplacement de $p/\sqrt{1+n^2}$. On génère alors une grille d'échantillonnage carrée dans la géométrie définie par la vitesse du point subsatellite et sa perpendiculaire, le pas d'échantillonnage dans ces deux directions valant $p/\sqrt{1+n^2}$. On densifie ainsi l'échantillonnage d'un facteur $\sqrt{1+n^2}$ au prix d'une réduction de la fauchée du même facteur.

Dans un autre mode de mise en oeuvre avantageux encore, il est proposé un procédé d'acquisition et de traitement d'une image d'observation satellitaire de la terre au moyen d'une seule barrette ou matrice de détecteurs, avec un temps d'échantillonnage correspondant à l'inverse de la fréquence de coupure desdits détecteurs, caractérisé en ce qu'on agglomère les pixels ainsi obtenus par groupe d'au moins quatre pixels voisins de façon à réaliser un échantillonnage quinconce, le pas entre deux lignes de l'échantillonnage ainsi réalisé correspondant au pas entre deux lignes successives de la matrice de pixels initiale.

L'échantillonnage ainsi obtenu à partir de ces différentes variantes de mise en oeuvre est transmis au sol où l'on réalise au sol une interpolation quinconce sur les pixels reçus. Grâce à cette agglomération et au sous-échantillonnage en quinconce, on peut reconstituer au sol une image sans repliement de spectres.

D'autres caractéristiques et avantages de l'invention ressortiront encore de la description qui suit. Cette description est purement illustrative et non limitative. Elle doit être lue en regard des dessins annexés sur lesquels seul le quart du spectre est représenté, le complément s'en déduisant par des considérations de symétrie :

- la figure 1 illustre le principe d'une acquisition par balayage pousse-balai ;
- la figure 2 illustre une chaîne de traitement d'images relevées par balayage pousse-balai ;
- la figure 3 illustre l'acquisition selon le procédé décrit dans FR 2 678 460 ;
- la figure 4 représente une matrice de pixels obtenue en mettant en oeuvre l'acquisition de la figure 3 ;
- la figure 5 est une représentation dans le plan de Fourier des courbes de niveau de la Fonction de Transfert de Modulation à symétrie rectangulaire ;
- la figure 6 illustre un mode de mise en oeuvre possible pour l'invention ;
- la figure 7 illustre une matrice de pixels acquise en mettant en oeuvre le procédé de la figure 6 ;
- la figure 8 illustre un autre mode de mise en oeuvre possible pour l'invention ;
- la figure 9 est une représentation dans le plan de Fourier du spectre d'une image acquise en mettant en oeuvre le procédé de la figure 6 ;
- les figures 10a, 10b, 10c illustrent les repliements de spectre pour chacune de ces acquisitions ;
- la figure 11 illustre un autre mode de mise en oeuvre de l'invention semblable à celui de la figure 8 ;
- la figure 12 illustre un autre mode de traitement possible pour l'invention.

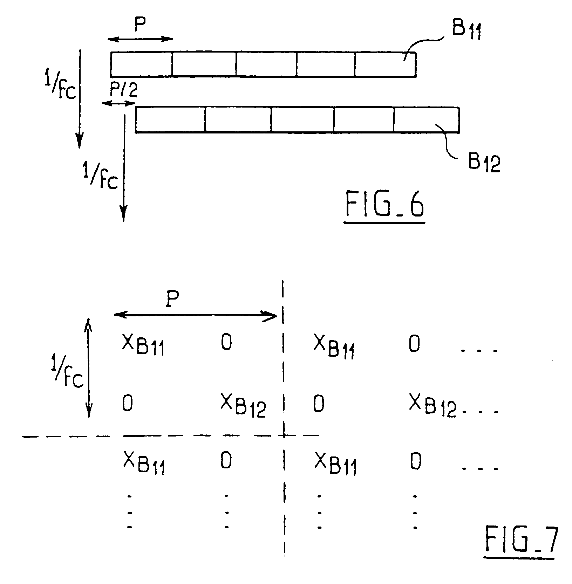

On a illustré sur la figure 6 le traitement d'acquisition que réalisent deux barrettes linéaires B11 et B12 conformément à un mode de mise en oeuvre possible pour l'invention.

Les barrettes B11 et B12 présentent une disposition semblable à celle des barrettes B1 et B2 : elles sont parallèles et juxtaposées et sont décalées dans la direction selon laquelle elles s'étendent, d'une fraction de pixel, par exemple d'un demi-pixel (c'est-à-dire de p/2, où p est le pas entre deux détecteurs élémentaires d'une même barrette).

Le temps d'échantillonnage de chacune des barrettes B11, B12 est choisi égal à 1/fc, où fc est la fréquence de coupure correspondant à la FTM de l'appareillage.

Dans la pratique, le temps d'échantillonnage 1/fc et le pas p entre détecteurs coïncident.

La matrice de pixels alors obtenue est celle illustrée sur la figure 7, sur laquelle les pixels acquis sur la barrette B11 sont référencés XB11, ceux acquis par la barrette B12 étant référencés par XB12.

Ainsi qu'on peut le voir sur la figure 7, on dispose ainsi de deux images correspondant aux pas d'acquisition classiques de 1/fc et p, mais décalées l'une par rapport à l'autre de 1/2fc en ligne et de p/2 en colonne.

Par conséquent, par rapport à l'acquisition décrite en référence aux figures 3 et 4, on a enregistré un pixel sur deux en ligne et en colonne, c'est-à-dire que l'on a réalisé un échantillonnage quinconce.

Sur la matrice de la figure 7, les pixels de la matrice de la figure 4 qui n'ont pas été acquis ont été remplacés par des 0.

Ces pixels 0 sont restitués au sol par une interpolation à partir des pixels XB11 et XB12 de leur voisinage.

Le traitement d'interpolation permettant de reconstituer ces pixels manquant est par exemple une interpolation de Fourier, classiquement connue de l'Homme du Métier et qui ne sera pas ici décrite plus en détails.

D'autres traitements d'interpolation sont bien entendu possibles. A titre d'exemple, on pourra également utiliser un traitement d'interpolation du type de celui décrit dans la publication :

"Analyse multirésolution pour les images avec un facteur de résolution $\sqrt{2}$" - J.C. FEAUVEAU - Traitement du signal - Volume 7 - n°2 - 1990.

Le pas p correspondant généralement à 1/fc, l'acquisition réalisée est donc équivalente à un échantillonnage quinconce, également appelée hexagonal centré, avec un pas $p.\sqrt{2}$ de la même image tournée de 45°.

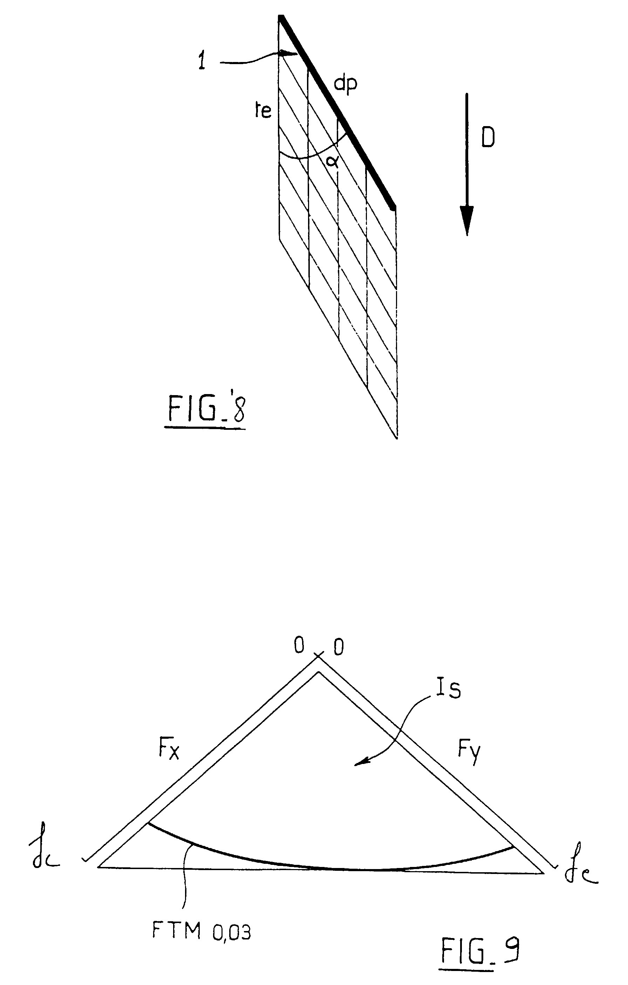

Par conséquent, l'échantillonnage proposé par l'invention peut également être obtenu, ainsi qu'illustré sur la figure 8, au moyen d'une seule barrette 11 parallèle à la zone qu'elle observe et orientée dans son plan de déplacement d'un angle $\alpha$ de 45° par rapport à sa direction de déplacement D.

Le temps te d'échantillonnage selon la direction de déplacement est alors choisi de façon à correspondre à $p/\sqrt{2}$, où p est le pas d'échantillonnage le long de la barrette 1, l'échantillonnage ainsi généré correspondant à un échantillonnage carré de pas $p/\sqrt{2}$.

Le spectre d'un tel échantillonnage a été illustré sur la figure 9 et correspond à celui de la figure 5 tourné de 45°.

On voit sur cette figure que la zone du plan de Fourier occupée par le spectre de l'image est le triangle tangent à la courbe $FTM_{0,03}$.

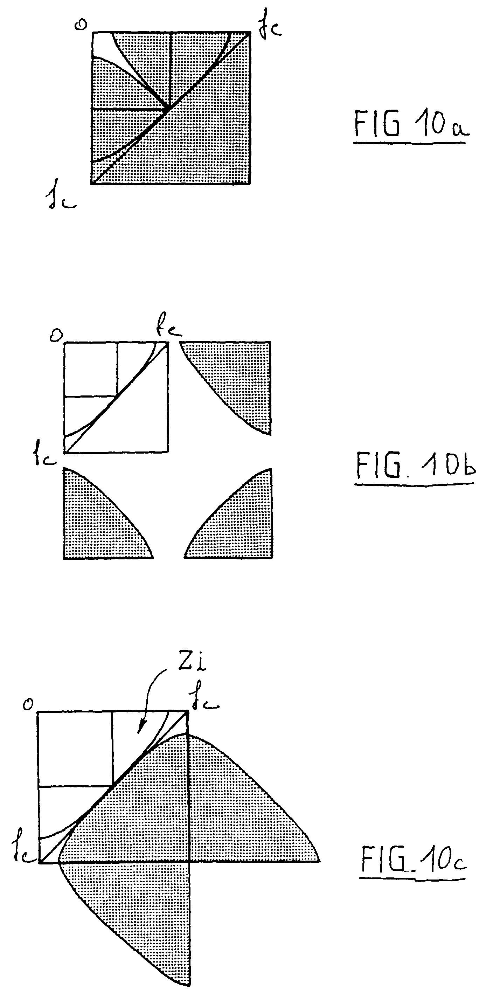

On se réfère maintenant aux figures 10a à 10c.

Les zones grisées représentées sur ces figures sont les zones du plan de Fourier où le repliement de spectre est supérieur à 3 %, pour chacun des trois modes d'acquisition.

On voit sur la figure 10a que dans le cas d'une acquisition classique, seule une petite partie de l'information est peu polluée (moins de 15 %).

Dans le cas d'une acquisition selon le traitement décrit dans FR 2 678 460, les repliements spectraux sont en dehors de la zone occupée par le spectre (figure 10b).

Il en est de même dans le cas du traitement quinconce proposé par l'invention dans lequel le repliement de spectre intervient en dehors de la zone $Z_i$ (figure 10c).

Ces résultats sont par ailleurs indiqués dans le tableau I ci-dessous sur lequel on a porté :

- la zone du plan de Fourier polluée par le repliement de spectres, exprimée en fraction de la surface de la zone a priori accessible compte tenu de l'échantillonnage,
- la zone du plan de Fourier pour lequel le contenu fréquentiel n'est pas trop atténué par la fonction de transfert, caractérisée par une valeur de FTM supérieure au seuil de 3% ;
- la quantité de données produites pour imager une même zone, normalisée par le débit "classique".

TABLEAU I

|  | CLASSIQUE | FR 2 678 460 | ECHANTILLONNAGE CONFORME A L'INVENTION |
|---|---|---|---|
| zone affectée par le repliement | 85% | 0% | 0% |
| Zone où FTM > 3 % | 100% | 56% | 99% |
| Débit des données | 1 | 4 | 2 |

On voit sur ce tableau que le traitement décrit dans FR 2 678 460 ne présente pas de repliement spectral mais génère des spectres en grande partie vides.

A l'inverse, le traitement classique utilise une zone du plan de Fourier qui est trop restreinte pour contenir toute l'information transmise par la FTM instrumentale, ce qui induit un fort niveau de repliement des spectres et interdit tout déconvolution.

L'échantillonnage proposé par l'invention permet quant à lui d'obtenir un spectre qui occupe une zone où la Fonction de Transfert de Modulation est suffisante pour que le signal soit exploitable et où le repliement du spectre est négligeable. Le débit de données est deux fois moins important qu'avec l'échantillonnage de FR 2 678 460.

La propriété d'optimalité de l'échantillonnage proposé provient de l'affaissement de la FTM (donc de l'information) suivant la diagonale précisément dans la direction où l'échantillonnage quinconce possède la résolution géométrique la plus grossière. Ceci permet d'effectuer une déconvolution dans de bonnes conditions.

A l'inverse, les résolutions ligne et colonne sont identiques à celles que l'on obtient avec un échantillonnage classique, c'est-à-dire en prenant tous les points qui s'annulent à la fréquence Shannon.

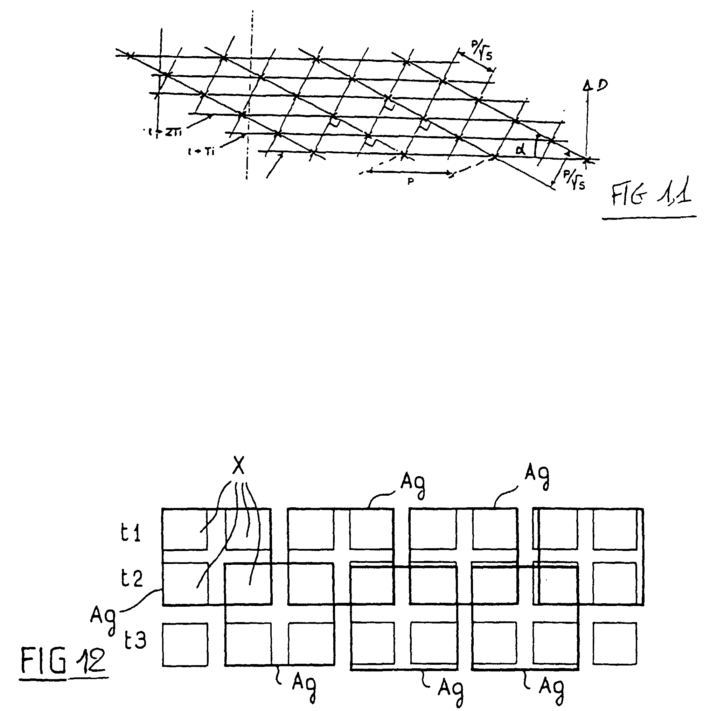

De façon plus générale, ainsi qu'illustré sur la figure 11, une FTM significative et un repliement de spectre limité sont avantageusement obtenus au moyen d'une barrette de détecteurs parallèle à la zone qu'elle observe et orientée dans son plan de déplacement d'un angle $\alpha$ par rapport à sa direction de déplacement, tel que :

$$Tg\ \alpha = 1/n, \text{ avec n entier ;}$$

le temps d'échantillonnage correspond à un déplacement de

$$p/\sqrt{1+n^2}$$

Le suréchantillonnage illustré sur la figure 10 correspond au cas n = 2.

Le cas particulier où $\alpha = 45°$ et le temps d'échantillonnage est égale à $p/\sqrt{2}$ correspond à n = 1.

Bien entendu, on se place dans ces différents cas dans l'hypothèse où p correspond à 1/fc.

On a illustré sur la figure 12 un autre mode de mise en oeuvre possible pour l'invention.

Dans ce mode de mise en oeuvre, un premier échantillonnage est réalisé de façon classique au moyen d'une seule barrette de détecteurs et avec un temps d'échantillonnage correspondant à 1/fc.

Sur la figure 12 précitée, on a représenté en traits fins les pixels X de trois lignes $t_1$, $t_2$, $t_3$ relevées avec cet échantillonnage au moyen d'une barrette de détecteurs CCD.

Selon le traitement conforme à cette mise en oeuvre de l'invention, on agglomère les pixels X, par groupe d'au moins quatre, tout en conservant la même fréquence d'échantillonnage.

Les pixels Ag ainsi obtenus sont représentés en traits gras sur la figure 12, chaque pixel Ag étant la somme de quatre pixels X voisins répartis en carré.

Les pixels Ag d'une même ligne de la trame agglomérée sont juxtaposés de façon jointive, les pixels Ag de deux lignes successives de la trame agglomérée étant décalés de la largeur d'un demi-pixel Ag et se recouvrant sur la hauteur d'une ligne de pixels X.

On dispose ainsi d'un suréchantillonnage quinconce analogue à celui de la figure 7 :

- deux lignes successives sont séparées de 1/fc, c'est-à-dire de deux fois 1/Fc où Fc correspond à la fréquence de coupure de quatre détecteurs agglomérés de la barrette utilisée pour l'acquisition initiale,
- deux pixels Ag d'une même ligne sont séparés d'une distance correspondant à la largeur élémentaire desdits pixels Ag.

A la réception, on réalise sur ce suréchantillonnage un traitement d'interpolation quinconce et une déconvolution.

Avec une tel traitement, il est possible de restituer quasiment la résolution initiale de l'image, alors que le débit est divisé par deux.

## Revendications

1. Procédé d'acquisition et de traitement d'une image d'observation satellitaire de la terre au moyen d'au moins une barrette ou une matrice de détecteurs de type à transfert de charge défilant en regard d'une zone observée, dans lequel on réalise une acquisition d'une pluralité de pixels, que l'on échantillonne en quinconce, caractérisé en ce que les pas en ligne et en colonne de cet échantillonnage quinconce sont tels que le spectre de l'image est principalement situé dans une zone du plan de Fourier où la Fonction de Transfert de Modulation est significative et où le repliement du spectre est limité.

2. Procédé selon la revendication 1 d'acquisition et de traitement d'une image d'observation satellitaire de la terre au moyen d'au moins deux barrettes ou matrices de détecteurs de même pas, s'étendant de façon juxtaposée perpendiculairement à leurs directions de déplacement et décalées d'un nombre entier plus une fraction de pas élémentaire parallèlement à leur direction de déplacement, lesdites barrettes ou matrices étant décalées l'une par rapport à l'autre d'une fraction de pas élémentaire, perpendiculairement à leur direction de déplacement, caractérisé en ce que les temps d'échantillonnage de ces deux barrettes sont égaux à l'inverse de la fréquence de coupure des détecteurs élémentaires.

3. Procédé selon la revendication 1 d'acquisition et de traitement d'une image d'observation satellitaire de la terre au moyen d'une seule barrette ou matrice de détecteurs, dont le pas p correspond à l'inverse de la fréquence de coupure desdits détecteurs, caractérisé en ce que ladite barrette est orientée dans son plan de déplacement d'un angle $\alpha = 1/n$ par rapport à sa direction de déplacement, n étant un nombre entier, et en ce que le temps d'échantillonnage des détecteurs élémentaires est de $p/\sqrt{1+n^2}$.

4. Procédé selon la revendication 3, caractérisé en ce que l'angle entre la barrette ou matrice de détecteurs et la direction de déplacement est de 45°, le temps d'échantillonnage des détecteurs élémentaires étant de $p/\sqrt{2}$.

5. Procédé selon la revendication 1 d'acquisition et de traitement d'une image d'observation satellitaire de la terre au moyen d'au moins une barrette ou matrice de détecteurs, avec un temps d'échantillonnage correspondant à l'inverse de la fréquence de coupure desdits détecteurs, caractérisé en ce qu'on agglomère les pixels ainsi obtenus par groupe d'au moins quatre pixels voisins de façon à réaliser un échantillonnage quinconce, le pas entre deux lignes de l'échantillonnage ainsi réalisé correspondant au pas entre deux lignes successives de la matrice de pixels initiale.

6. Procédé selon l'une des revendications précédentes, caractérisé en ce que l'échantillonnage ainsi obtenu est transmis au sol et en ce qu'on réalise au sol une interpolation quinconce sur les pixels reçus.

**Patentansprüche**

1. Verfahren zur Aufnahme und Bearbeitung eines Satellitenüberwachungsbildes der Erde unter Anwendung mindestens einer Detektoranordnung oder Detektormatrix vom Ladungsübertragungstyp, die über eine beobachtete Zone verläuft, bei dem eine Erfassung einer Vielzahl von Bildpunkten erfolgt, an denen schachbrettartig eine Abtastung vorgenommen wird, dadurch gekennzeichnet, daß die Schritte dieser schachbrettartigen Abtastung zeilenweise und spaltenweise derart getroffen werden, daß das Spektrum des Bildes sich hauptsächlich in einem Bereich der Fourierebene befindet, wo die Frequenzmodulation signifikant ist und wo die Faltung des Spektrums begrenzt ist.

2. Verfahren nach Anspruch 1 zur Aufnahme und Bearbeitung eines Satellitenüberwachungsbildes der Erde mit Hilfe von mindestens zwei Detektoranordnungen oder -matrizen gleichen Schritts, die sich nebeneinanderliegend senkrecht zu ihren Verschiebungsrichtungen erstrecken und um eine ganze Zahl plus einen Bruchteil eines Elementarschritts parallel zu ihrer Verschiebungsrichtung versetzt sind, welche Anordnungen oder Matrizen gegeneinander um einen Bruchteil des Elementarschritts senkrecht zu ihrer Verschiebungsrichtung versetzt sind, dadurch gekennzeichnet, daß die Abtastzeiten dieser beiden Anordnungen gleich dem Kehrwert der Grenzfrequenz der Elementardetektoren sind.

3. Verfahren nach Anspruch 1 zur Aufnahme und Bearbeitung eines Satellitenüberwachungsbildes der Erde mittels einer einzelnen Detektoranordnung oder -matrix, deren Schritt p dem Kehrwert der Grenzfrequenz der genannten Detektoren entspricht, dadurch gekennzeichnet, daß die genannte Anordnung in ihrer Verschiebungsebene um einen Winkel $\alpha = 1/n$ gegenüber ihrer Verschiebungsrichtung ausgerichtet ist, wobei n eine ganze Zahl darstellt, und daß die Abtastzeit der einzelnen Detektoren $p/\sqrt{1+n^2}$ beträgt.

4. Verfahren nach Anspruch 3, dadurch gekennzeichnet, daß der Winkel zwischen der Detektoranordnung oder -matrix und der Verschiebungsrichtung 45° beträgt, wobei die Abtastzeit der einzelnen Detektoren $p/\sqrt{2}$ beträgt.

5. Verfahren nach Anspruch 1 zur Aufnahme und Bearbeitung eines Satellitenüberwachungsbildes der Erde mittels mindestens einer Detektoranordnung oder -matrix, mit einer Abtastzeit, die dem Kehrwert der Grenzfrequenz der genannten Detektoren entspricht, dadurch gekennzeichnet, daß die auf diese Weise gewonnenen Bildpunkte zu einer Gruppe von mindestens vier benachbarten Bildpunkten zusammengefaßt werden, so daß eine schachbrettartige Abtastung erfolgt, wobei der auf diese Weise herbeigeführte Schritt zwischen zwei Abstandszeilen dem Schritt zwischen zwei aufeinanderfolgenden Zeilen der Ausgangsmatrix von Bildpunkten entspricht.

6. Verfahren nach einem der vorhergehenden Ansprüche, dadurch gekennzeichnet, daß die so gewonnene Abtastung zur Erde übertragen wird und daß auf der Erde eine schachbrettartige Interpolation an den empfangenen Bildpunkten vorgenommen wird.

**Claims**

1. A method of acquiring and processing a satellite observation image of the earth by means of at least one strip or a matrix of detectors of the charge transfer type travelling over an observed zone, in which a plurality of pixels are acquired, which pixels are sampled in a staggered configuration, the method being characterized in that the line pitch and the column pitch of said staggered sampling are such that the image spectrum is situated mainly in a zone of the Fourier plane where the modulation transfer function is meaningful and where spectrum aliasing is limited.

2. A method according to claim 1 of acquiring and processing a satellite observation image of the earth by means of at least two strips or matrices of detectors at the same pitch, extending in juxtaposed manner perpendicularly to their displacement directions and offset by an integer plus a fraction of the individual pitch step size parallel to their displacement direction, said strips or matrices being offset relative to each other by a fraction of the pitch step size. perpendicularly to their displacement direction, the method being characterized in that the sampling times of said two strips are equal to the reciprocal of the cutoff frequency of the individual detectors.

3. A method according to claim 1 of acquiring and processing a satellite observation image of the earth by means of a single strip or matrix of detectors, at a pitch $\underline{p}$ corresponding to the reciprocal of the cutoff frequency of said detectors, the method being characterized in that said strip is oriented in its displacement plane at an angle $\alpha = 1/n$ relative to its displacement direction, $\underline{n}$ being an integer number, and in that the sampling time of the individual detectors is $p/\sqrt{1+n^2}$.

4. A method according to claim 3, characterized in that the angle between the strip or matrix of detectors and the displacement direction is 45°, the sampling time of the individual detectors being $p/\sqrt{2}$.

5. A method according to claim 1 of acquiring and processing a satellite observation image of the earth by means of at least one strip or matrix of detectors with a sampling time corresponding to the reciprocal of the cutoff frequency of said detectors, the method being characterized in that the pixels obtained in this way are lumped together in groups of at least four adjacent pixels so as to perform sampling in a staggered configuration. the pitch between two lines of sampling performed in this way corresponding to the pitch between two successive lines of the initial matrix of pixels.

6. A method according to any preceding claim. characterized in that the sampling obtained in this way is transmitted to the ground, and in that the received pixels are subjected on the ground to staggered interpolation.

FIG.1

FIG.2

$$P$$

$$Te = \tfrac{1}{2}fc$$

$$\tfrac{1}{fc}$$

$$P/2$$

$$Te = \tfrac{1}{2}fc$$

$B_1$

$B_2$

FIG.3

$$P$$

$$\tfrac{1}{fc}$$

| $X_{B_1}$ | $X_{B_2}$ | $X_{B_1}$ | $X_{B_2}$ ... |
| $X_{B_1}$ | $X_{B_2}$ | $X_{B_1}$ | $X_{B_2}$ ... |
| $X_{B_1}$ | $X_{B_2}$ | $X_{B_1}$ | $X_{B_2}$ ... |

FIG.4

0  0

0,1          0,1      Is

0,2    Fy

Fx          0,2

0,3          0,3

0,4          0,4    $fc$

$$f_c = 0,5 \times 2 f_c$$

FTM 0,03

FIG.5

FIG_6

FIG_7

FIG_8

FIG_9

FIG 10a

FIG. 10b

FIG. 10c

FIG 1,1

FIG 12